# EUROPEAN PATENT SPECIFICATION

(11) **EP 2 841 825 B1**
(45) Date of publication and mention of the grant of the patent: **27.05.2020**
(21) Application number: 13719811.5
(22) Date of filing: 25.04.2013
(51) Int. Cl.: F16J 15/34, F16J 15/40

(54) **COMPRESSOR, SEAL GAS DELIVERY, AND METHOD**
VERDICHTER, DICHTUNGSGASZUFUHR UND VERFAHREN
COMPRESSEUR, DISTRIBUTION DE GAZ D'ÉTANCHÉITÉ, ET PROCÉDÉ

(30) Priority: 27.04.2012 IT CO20120020
(43) Date of publication of application: 04.03.2015
(73) Proprietor: Nuovo Pignone S.r.l., 50127 Florence (IT)
(72) Inventor: BALDASSARRE, Leonardo, I-50127 Florence (IT); BERNOCCHI, Andrea, I-50127 Florence (IT)
(74) Representative: Illingworth-Law, William Illingworth
(86) International application number: PCT/EP2013/058663
(87) International publication number: WO 2013/160416

(56) References cited:
- EP-A2- 2 233 802
- CH-A- 514 804
- CH-A5- 585 361
- US-A- 5 718 560
- US-A1- 2007 025 837

## Description

Embodiments of the subject matter disclosed herein generally relate to turbo machines, and more particularly, to the delivery of seal gas into a compressor end seal.

CH 585 361 A5 discloses a shaft seal for turbomachinery.

A compressor is a machine which accelerates the particles of a process fluid to, ultimately, increase the pressure of the process fluid, e.g., a gas, through the use of mechanical energy. Compressors are commonly used in the energy industry to produce, process, re-inject and transport many different types of gases. Among the various types of compressors are the so-called centrifugal compressors, in which mechanical energy operates on process fluid input to the compressor by way of centrifugal acceleration, e.g., by rotating a centrifugal impeller by which the process fluid is passing. More generally, centrifugal compressors can be said to be part of a class of machinery known as "turbo machines" or "turbo rotating machines".

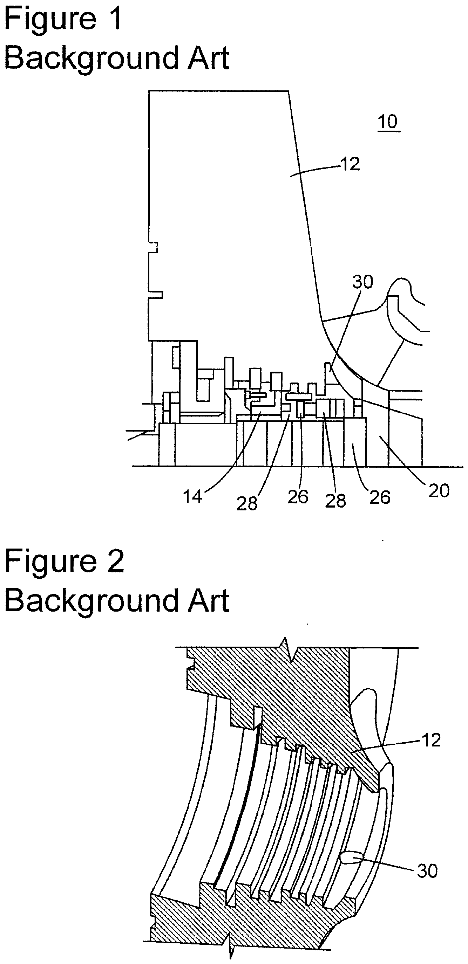

Many turbo machines, and particularly, centrifugal compressors incorporate the use of shaft end seals into which a seal gas may be injected, for example, to improve seal performance creating a barrier against process gas leakage. Many compressors are now provided with one or more dry gas seals at either or both ends of the compressor to improve machine performance and reduce process fluid leakage. For example, and as shown in Figs. 1 and 2, a compressor 10 may include a rotor shaft 20 rotatably disposed relative to a stator 12. A shaft end seal in the form of a dry gas seal, indicated generally as 14 in Fig. 1 may be disposed between the rotor shaft 20 and the stator 12. Dry gas seal 14 may include primary and secondary seal rotor rings 26 and primary and secondary seal stator rings 28 each biased towards a respective one of the primary and secondary seal rotor rings 26. During operation of compressor 10, grooves (not shown) in the dry gas rotor seal rings 26 and stator seal rings 28 may generate a fluid dynamic force to create a running gap which provides a sealing function without contact between the sealing rings. A seal gas, typically, filtered process gas, may be supplied to the dry gas seal to support the running gap and otherwise improve the performance of compressor 10. As shown in Figs. 1 and 2, the seal gas may be delivered through an opening 30 in the stator 12.

During operation of the compressor 10, heat generated by the compression process and other processes to which the process gas is subjected oftentimes generate a significant amount of heat which may be absorbed by the seal (process) gas. Moreover, seal gas may additionally be heated by a dedicated device, such as a heater or heat exchanger to aid in the prevention or suppression of condensation which may arise during or before the expansion of the seal gas within the dry gas seal. Thus, seal gas entering the dry gas seal through port 30 may have a high temperature relative to, for example, ambient air and/or gas already present within dry gas seal 14.

During a temporary compressor shutdown, this hot seal gas may continue to be supplied to the dry gas seal. Moreover, the temperature of the seal gas may be further increased during a temporary compressor shutdown due to the absorption of residual heat, for example, from stationary compressor components.

Heat within the seal gas continuously supplied to the compressor during temporary shutdown may cause a region or regions on the shaft 20 proximate to the dry gas seal 14 to become unevenly heated, i.e., one or more regions of the rotor shaft 20 may develop a temperature differential with respect to neighboring regions of the rotor shaft 20. These so-called hotspots are potentially problematic. For example, seal gas entering the dry gas seal through port 30 may impinge against a dry gas seal component adjacent the compressor rotor shaft, or worse, directly against a surface of the rotor shaft itself. Depending on certain factors, such as the rate of heat transfer through the components of the dry gas seal adjacent the rotor shaft, the rate of flow of the seal gas, the temperature of the seal gas, etc., one or more such hotspots may cause a deformation, e.g., bending, warping, etc., in the rotor shaft. During subsequent compressor startup, a vibration in the rotating assembly may be induced as a consequence of the deformation. The vibration may have a magnitude sufficient to render the compressor vulnerable to damage, particularly when the compressor approaches its first critical speed. Such vibration may necessitate one or more additional temporary shutdowns and restarts to allow for the uneven heating of the rotating assembly to dissipate and for the deformation to ameliorate. In severe cases or in the event of vibration related damage to the compressor, a full shutdown may be required.

Therefore, what is needed is a compressor, and more particularly, a seal gas delivery system, which evenly distributes seal gas heat within an end seal, which allows a compressor to be more easily restarted after temporary shutdown, which prevents a localized impingement of hot seal gas against a rotor shaft of the compressor, which prevents thermal deformation of the rotor shaft, which provides an easy retrofit solution, which is low in cost, which maintains the existing, weight, configuration, and manner of operation of a compressor and dry gas seal and which provides an alternative to heat distribution effected by compressor shaft rotation.

The present invention is defined in the accompanying claims.

According to an exemplary embodiment, a seal gas delivery system for an end seal on a turbo machine rotor shaft as defined in claim 1 includes a seal gas passageway for delivering a seal gas to the end seal and a seal gas distributor for receiving at least a portion of the seal gas from the seal gas passageway, the seal gas distributor having a plurality of holes for distributing the seal gas about the rotor shaft during turbo machine standstill, the holes being located on a cylindrical surface.

The holes are typically arranged circularly.

The holes are preferably arranged all around said rotor shaft, more preferably regularly all around said rotor shaft.

According to another exemplary embodiment, a turbo machine as defined in claim 9 includes a stator, a rotor shaft rotatable relative to the stator, an end seal disposed between the stator and the rotor, a seal gas passageway for delivering a seal gas to the end seal, and a seal gas distributor for receiving at least a portion of the seal gas from the seal gas passageway and distributing the seal gas about the rotor shaft during turbo machine standstill; the seal gas distributor has a plurality of holes and its holes are located on a cylindrical surface.

Typically, a container is provided for containing the seal gas; container is fluidly connected to the seal gas distributor.

A method of operating a turbo machine including an end seal on a rotor shaft thereof as defined in claim 11 includes the steps of delivering a seal gas to the end seal during turbo machine standstill and distributing the seal gas about the rotor shaft through a plurality of holes arranged all around said rotor shaft to prevent uneven heating of the rotor shaft.

Preferably, in order to induce a stronger swirl in the seal gas around the shaft, the seal gas flow ejected from at least some, preferably all, of the holes is inclined with respect to a corresponding radial direction defined in relation to a longitudinal axis of the rotor shaft.

The accompanying drawings, which are incorporated in and constitute a part of the specification, illustrate one or more embodiments and, together with the description, explain these embodiments. In the drawings:
Figure 1 is a partial-cross sectional view of a compressor.
Figure 2 is a partial cut away view of the compressor shown in Fig. 1.
Figure 3 is a partial cross-sectional view of a compressor according to an exemplary embodiment.
Figure 4 is a partial perspective view of a distributor of the compressor shown in Fig. 3.
Figure 5 is a partial cross-sectional view of a compressor according to another exemplary embodiment, not falling under the scope of the claims.
Figure 6 is a partial perspective view of a distributor of the compressor shown in Fig. 5.
Figure 7 depicts a method according to an exemplary embodiment.

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of turbo machine systems. However, the embodiments to be discussed next are not limited to these exemplary systems, but may be applied to other systems.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

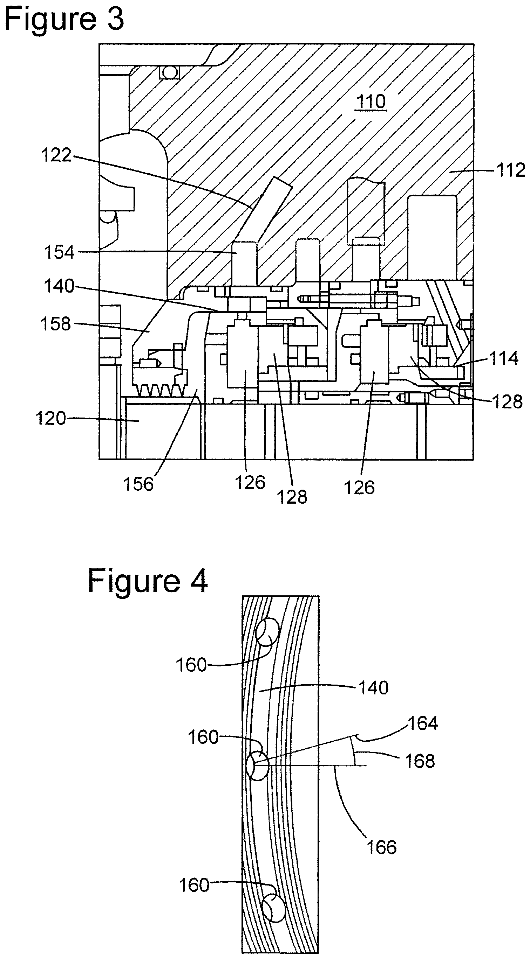

Figs. 3 and 4 show an exemplary embodiment of a seal gas delivery system according to the present invention. Therein, a compressor 110 includes a stator 112 having a seal gas passageway 122 extending through stator 112 to a dry gas seal 114. Seal gas may be delivered through a primary port 154 in stator 112 to dry gas seal 114.

Compressor 110 further includes a labyrinth seal 158 adjacent dry gas seal 114. As shown in Fig. 3, labyrinth seal 158 is provided with a distributor 140 in the form of a ring portion extending from labyrinth seal 158. Distributor 140 is provided with a plurality of gas injection holes 160; holes 160 are located on a cylindrical surface, in particular, they are arranged circularly according to one circle.

During a temporary standstill or idling of compressor 110, seal gas may continue to be supplied to dry gas seal 114, as previously discussed. At least a portion of the seal gas may be received by distributor 140 and released about the circumference of rotor shaft 120 through each of the plurality of seal gas injection holes 160. This action may enhance a homogenous distribution of seal gas around the shaft, with or without swirl motion, and thereby inhibit localized heating of rotor shaft 120.

Moreover, distributor 140 may also prevent seal gas exiting port 154 from impinging directly against rotor shaft 120. For example, and as shown in Fig. 3, labyrinth seal 158 and dry gas seal 114 define a chamber 156 in which the surface of turbo shaft 120 is exposed directly to seal gas. Since distributor 140 is disposed between rotor shaft 120 and vent 130, direct impingement of potentially hot seal gas against this surface is inhibited or prevented.

As may be further appreciated in Fig. 4, gas injection holes 160 may also be configured to provide a circumferential swirl of seal gas within chamber 156 to further promote the circulation of gas and the uniform distribution of heat about shaft 120. As shown in Fig. 4, each gas injection hole 160 may define an axis 164 at an angle 168 with a radial line 166 extending from a longitudinal axis of rotor shaft 120 through the center of the gas injection hole 160; in other words, the seal gas flow ejected from holes 160 is inclined with respect to a corresponding radial direction defined in relation to a longitudinal axis of said rotor shaft. Alternatively, angle 168 may vary between holes 160 of distributor 140 in order to, for example, induce a greater degree of turbulence providing a uniform heating of the shaft 120 in chamber 156.

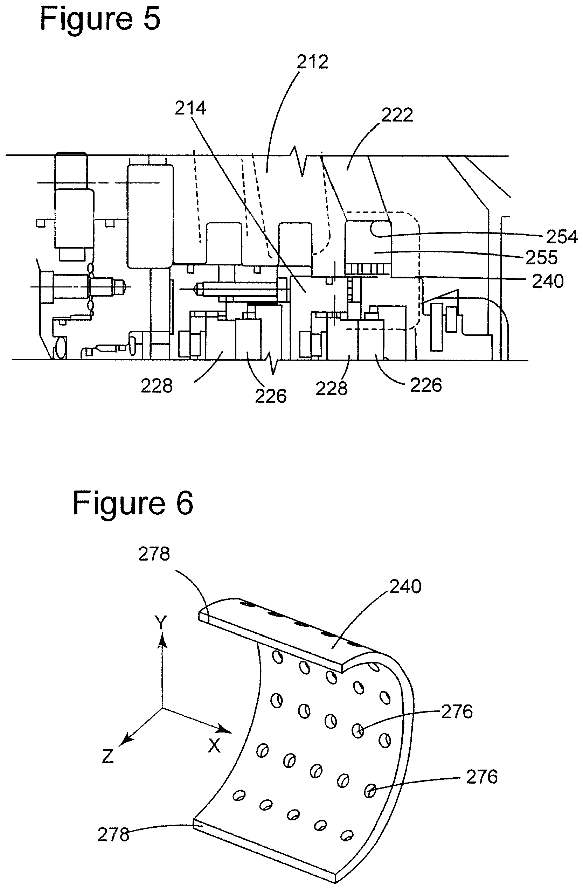

Figs. 5 and 6 show another exemplary embodiment, not falling under the scope of the claims. Therein, a gas delivery system includes a seal gas passageway 222 extending through stator 212 to a port 254. Seal gas exiting port 254 enters a groove 255 in the stator 212.

A distributor in the form of an arc segment or full cylinder 240 having ends 278 is disposed proximately of the vent 254 within groove 255. Distributor 240 may be fixed within groove 255 mechanically, for example, by a friction fit or a fastener or, chemically, for example, by an adhesive or a weld. In the embodiment of Figs. 5 and 6, a midpoint of distributor 240 may be positioned between vent 254 and the rotor shaft of compressor 210 to receive seal gas exiting vent 254. Seal gas exiting vent 254 may initially be deflected and thus urged along the groove 255, for example, clockwise and counterclockwise. Seal gas may also pass through any of holes 276. In this manner, seal gas may be distributed about the rotor shaft of compressor 210 and may thereby be prevented or inhibited from forming a localized high temperature area on or near the rotor shaft during a temporary shutdown of compressor 210. Distributor 240 may be provided within groove 255 as part of the manufacturing process of compressor 210, i.e. as original equipment, or alternatively, distributor 240 may be provided as an aftermarket product introduced to groove 255 during a retrofit.

In the embodiment shown in Figs. 5 and 6, distributor 240 is shown as an arc segment having a plurality of holes 260; holes 260 are located on a cylindrical surface, in particular, they are arranged circularly according to a number (specifically five) of parallel circles; holes 260 are arranged all around the rotor shaft; according to the preferred example of Fig. 6, they are arranged regularly all around the rotor shaft. However, distributor 240 may be provided in other configurations as well. For example, distributor 240 may be provided without holes 276 such that the entirety of seal gas received by the distributor 240 is deflected along groove 255. As another example, distributor 240 may be provided in a full ring configuration or a series of ring segments. The size and configuration of the holes 260 in distributor 240 may also vary. For example, if distributor 240 is provided as a series of ring segments, the space between each segment may define a plurality of holes through which the flow of seal gas may be controlled.

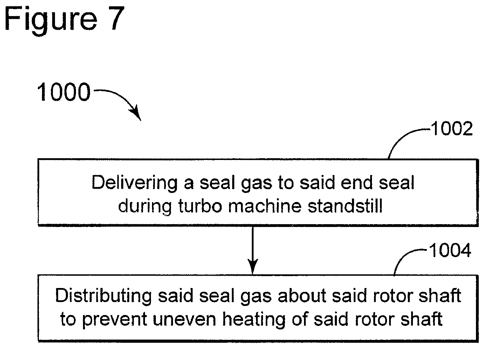

Thus, according to an exemplary embodiment as shown in the flowchart of Fig. 7, a method (1000) of operating a turbo machine including an end seal on a rotor shaft thereof can include steps of delivering (1002) a seal gas to the end seal during turbo machine standstill and distributing (1004) the seal gas about the rotor shaft through a plurality of holes arranged all around said rotor shaft to prevent uneven heating of the rotor shaft.

Although the seal gas distributor has been described as component of the compressor, a seal gas distributor according to the present invention may be provided as a component of the end seal itself. For example, one of ordinary skill in the art will appreciate that a seal gas delivery system may be configured such that the distributor may be incorporated into a dry gas seal cartridge.

Typically, the seal gas comes fluidly to the seal gas distributor from a container which is part of a turbo machine; such container may be small or big, and not necessarily dedicated only to the function of containing the seal gas.

The above-described embodiments are intended to be illustrative in all respects, rather than restrictive, of the present invention. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A seal gas delivery system for an end seal on a turbo machine rotor shaft (120), said seal gas delivery system comprising:
a seal gas passageway (122) for delivering a seal gas to said end seal;
a seal gas distributor (140) for receiving at least a portion of said seal gas from said seal gas passageway (122), said seal gas distributor (140) having a plurality of holes (160) for distributing said seal gas about said rotor shaft (120) during turbo machine standstill; and
a labyrinth seal (158) disposed proximately of said end seal;
wherein said holes (160) are located on a cylindrical surface and wherein said plurality of holes (160) are spaced apart relative to a longitudinal surface of said rotor shaft, and wherein said distributor (140) is in the form of a ring portion extending from said labyrinth seal (158).

2. The seal gas delivery system of claim 1, wherein said holes (160) are arranged circularly.

3. The seal gas of claim 1 or claim 2, wherein said holes (160) are arranged all around said rotor shaft (120), preferably regularly all around said rotor shaft.

4. The seal gas delivery system of any preceding claim, wherein said plurality of holes (160) are spaced apart relative to a circumferential surface of said rotor shaft.

5. The seal gas delivery system of any preceding claim, wherein each of said plurality of holes (160) defines an axis (164) and said axis is at a non-zero angle (168) relative to a radial line (166) extending from a longitudinal axis of said rotor shaft (120) through a center of said each of said plurality of holes (160).

6. The seal gas delivery system of any preceding claim, wherein said seal gas distributor (140) comprises an arc segment or full cylinder.

7. The seal gas delivery system of any preceding claim, wherein said seal gas distributor (140) comprises a ring.

8. The seal gas delivery system of any preceding claim, wherein said end seal is a dry gas seal (114).

9. A turbo machine, comprising:
a stator (112);
a rotor shaft (120) rotatable relative to said stator (112);
an end seal (114) disposed between said stator (112) and said rotor shaft;
the seal gas delivery system of any preceding claim, for delivering a seal gas to said end seal.

10. The turbo machine of claim 9, comprising a container containing seal gas, wherein said container is fluidly connected to said seal gas distributor (140).

11. A method of operating a turbo machine including an end seal on a rotor shaft (120) thereof, said method comprising:
delivering a seal gas to said end seal during turbo machine standstill; and
distributing with a distributor (140), said seal gas about said rotor shaft (120) through a plurality of holes (160) arranged all around said rotor shaft (120) and spaced apart relative to a longitudinal surface of said rotor shaft to prevent uneven heating of said rotor shaft (120), and
disposing a labyrinth seal (158) proximately of said end seal (114), wherein said distributor (140) is in the form of a ring portion extending from the labyrinth seal (158).

12. The method of operating a turbo machine of claim 11, wherein the seal gas flow ejected from at least some, preferably all, of said holes (160) is inclined with respect to a corresponding radial direction defined in relation to a longitudinal axis of said rotor shaft (120).

## Patentansprüche

1. Dichtungsgaszufuhrsystem für eine Enddichtung an einer Turbomaschinenrotorwelle (120), wobei das Dichtungsgaszufuhrsystem Folgendes umfasst:
einen Dichtungsgasdurchgang (122) zum Zuführen eines Dichtungsgases zu der Enddichtung;
einen Dichtungsgasverteiler (140) zum Aufnehmen mindestens eines Teils des Dichtungsgases aus dem Dichtungsgasdurchgang (122), wobei der Dichtungsgasverteiler (140) eine Vielzahl von Löchern (160) zum Verteilen des Dichtungsgases um die Rotorwelle (120) während des Stillstands der Turbomaschine aufweist; und
eine Labyrinthdichtung (158), die in der Nähe der Enddichtung angeordnet ist;
wobei die Löcher (160) auf einer zylindrischen Oberfläche angeordnet sind und wobei die Vielzahl von Löchern (160) relativ zu einer Längsfläche der Rotorwelle beabstandet sind, und wobei der Verteiler (140) die Form eines Ringabschnitts aufweist, der sich von der Labyrinthdichtung (158) aus erstreckt.

2. Dichtungsgaszufuhrsystem nach Anspruch 1, wobei die Löcher (160) kreisförmig angeordnet sind.

3. Dichtungsgas nach Anspruch 1 oder Anspruch 2, wobei die Löcher (160) um die gesamte Rotorwelle (120) herum, vorzugsweise regelmäßig um die gesamte Rotorwelle herum, angeordnet sind.

4. Dichtungsgaszufuhrsystem nach einem der vorstehenden Ansprüche, wobei die Vielzahl der Löcher (160) relativ zu einer Umfangsfläche der Rotorwelle beabstandet sind.

5. Dichtungsgaszufuhrsystem nach einem der vorstehenden Ansprüche, wobei jedes der Vielzahl von Löchern (160) eine Achse (164) definiert und sich die Achse in einem Winkel (168) ungleich Null relativ zu einer radialen Linie (166) befindet, die sich von einer Längsachse der Rotorwelle (120) durch eine Mitte von jedem der Vielzahl von Löchern (160) erstreckt.

6. Dichtungsgaszufuhrsystem nach einem der vorstehenden Ansprüche, wobei der Dichtungsgasverteiler (140) ein Bogensegment oder einen vollen Zylinder umfasst.

7. Dichtungsgaszufuhrsystem nach einem der vorstehenden Ansprüche, wobei der Dichtungsgasverteiler (140) einen Ring umfasst.

8. Dichtungsgaszufuhrsystem nach einem der vorstehenden Ansprüche, wobei die Enddichtung eine Trockengasdichtung ist (114).

9. Turbomaschine, umfassend:
einen Stator (112);
eine Rotorwelle (120), die relativ zu dem Stator (112) drehbar ist;
eine Enddichtung (114), die zwischen dem Stator (112) und der Rotorwelle angeordnet ist;
das Dichtungsgaszufuhrsystem nach einem der vorstehenden Ansprüche zum Zuführen eines Dichtungsgases zu der Enddichtung.

10. Turbomaschine nach Anspruch 9, umfassend einen Behälter, der Dichtungsgas enthält, wobei der Behälter in Fluidverbindung mit dem Dichtungsgasverteiler (140) steht.

11. Verfahren zum Betreiben einer Turbomaschine einschließlich einer Enddichtung auf einer Rotorwelle (120) davon, wobei das Verfahren Folgendes umfasst:
Zuführen eines Dichtungsgases zu der Enddichtung während des Stillstands der Turbomaschine; und
Verteilen, mittels eines Verteiler (140), des Dichtungsgases um die Rotorwelle (120) herum durch eine Vielzahl von Löchern (160), die um die gesamte Rotorwelle (120) herum angeordnet und relativ zu einer Längsfläche der Rotorwelle beabstandet sind, um eine ungleichmäßige Erwärmung der Rotorwelle (120) zu verhindern, und
Anordnen einer Labyrinthdichtung (158) in der Nähe der Enddichtung (114), wobei der Verteiler (140) die Form eines Ringabschnitts aufweist, der sich von der Labyrinthdichtung (158) erstreckt.

12. Verfahren zum Betreiben einer Turbomaschine nach Anspruch 11, wobei der aus mindestens einigen, vorzugsweise allen Löchern (160) ausgestoßene Dichtungsgasstrom in Bezug auf eine entsprechende radiale Richtung, die in Bezug auf eine Längsachse der Rotorwelle (120) definiert ist, geneigt ist.

## Revendications

1. Système de distribution de gaz d'étanchéité pour un joint d'extrémité sur un arbre de rotor de turbomachine (120), ledit système de distribution de gaz d'étanchéité comprenant :
un passage de gaz d'étanchéité (122) pour distribuer un gaz d'étanchéité audit joint d'extrémité ;
un distributeur de gaz d'étanchéité (140) pour recevoir au moins une partie dudit gaz d'étanchéité dudit passage de gaz d'étanchéité (122), ledit distributeur de gaz d'étanchéité (140) ayant une pluralité de trous (160) pour distribuer ledit gaz d'étanchéité autour dudit arbre de rotor (120) pendant l'arrêt de la turbomachine ; et
un joint labyrinthe (158) disposé à proximité dudit joint d'extrémité ;
dans lequel lesdits trous (160) sont situés sur une surface cylindrique et dans lequel ladite pluralité de trous (160) est espacée par rapport à une surface longitudinale dudit arbre de rotor, et dans lequel ledit distributeur (140) est sous la forme d'une partie annulaire s'étendant à partir dudit joint labyrinthe (158).

2. Système de distribution de gaz d'étanchéité selon la revendication 1, dans lequel lesdits trous (160) sont agencés circulairement.

3. Gaz d'étanchéité selon la revendication 1 ou la revendication 2, dans lequel lesdits trous (160) sont agencés tout autour dudit arbre de rotor (120), de préférence régulièrement tout autour dudit arbre de rotor.

4. Système de distribution de gaz d'étanchéité selon une quelconque revendication précédente, dans lequel ladite pluralité de trous (160) est espacée par rapport à une surface circonférentielle dudit arbre de rotor.

5. Système de distribution de gaz d'étanchéité selon une quelconque revendication précédente, dans lequel chacun de ladite pluralité de trous (160) définit un axe (164) et ledit axe est à un angle non nul (168) par rapport à une ligne radiale (166) s'étendant depuis un axe longitudinal dudit arbre de rotor (120) à travers un centre dudit chacun de ladite pluralité de trous (160).

6. Système de distribution de gaz d'étanchéité selon une quelconque revendication précédente, dans lequel ledit distributeur de gaz d'étanchéité (140) comprend un segment d'arc ou un cylindre plein.

7. Système de distribution de gaz d'étanchéité selon une quelconque revendication précédente, dans lequel ledit distributeur de gaz d'étanchéité (140) comprend un anneau.

8. Système de distribution de gaz d'étanchéité selon une quelconque revendication précédente, dans lequel ledit joint d'extrémité est un joint étanche au gaz sec (114).

9. Turbomachine, comprenant :
un stator (112) ;
un arbre de rotor (120) pouvant tourner par rapport audit stator (112) ;
un joint d'extrémité (114) disposé entre ledit stator (112) et ledit arbre de rotor ;
le système de distribution de gaz d'étanchéité selon une quelconque revendication précédente, pour distribuer un gaz d'étanchéité audit joint d'extrémité.

10. Turbomachine selon la revendication 9, comprenant un récipient contenant un gaz d'étanchéité, dans laquelle ledit récipient est raccordé fluidiquement audit distributeur de gaz d'étanchéité (140).

11. Procédé d'exploitation d'une turbomachine incluant un joint d'extrémité sur un arbre de rotor (120) de celle-ci, ledit procédé comprenant :
la distribution d'un gaz d'étanchéité audit joint d'extrémité pendant l'arrêt de la turbomachine ; et
la distribution avec un distributeur (140), ledit gaz d'étanchéité autour dudit arbre de rotor (120) à travers une pluralité de trous (160) agencés tout autour dudit arbre de rotor (120) et espacés par rapport à une surface longitudinale dudit arbre de rotor pour empêcher un chauffage irrégulier dudit arbre de rotor (120), et
la disposition d'un joint labyrinthe (158) à proximité dudit joint d'extrémité (114), dans lequel ledit distributeur (140) est sous la forme d'une partie annulaire s'étendant à partir du joint labyrinthe (158).

12. Procédé d'exploitation d'une turbomachine selon la revendication 11, dans lequel le flux de gaz d'étanchéité éjecté par au moins certains, de préférence tous, desdits trous (160) est incliné par rapport à une direction radiale correspondante définie par rapport à un axe longitudinal dudit arbre de rotor (120).
